(19)

Europäisches
Patentamt

European
Patent Office

Office européen
des brevets

(11) **EP 3 319 068 A1**

(12) **EUROPEAN PATENT APPLICATION**

(43) Date of publication:
**09.05.2018 Bulletin 2018/19**

(51) Int Cl.:
**G09C 5/00** *(2006.01)*      **H04L 9/32** *(2006.01)*

(21) Application number: **16196953.0**

(22) Date of filing: **02.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Skeyecode
75008 Paris (FR)**

(72) Inventor: **PITEL, Guillaume
94240 L'Hay Les Roses (FR)**

(74) Representative: **de Roquemaurel, Bruno et al
Omnipat
24 place des Martyrs de la Résistance
13100 Aix en Provence (FR)**

(54) **METHOD FOR SECURELY TRANSMITTING A SECRET DATA TO A USER OF A TERMINAL**

(57)     The invention relates to a method for securely transmitting a secret data to a user, the method comprising: receiving by a user terminal, from a secure processor (ASRV, SE), a software component (GC) protected against tampering and reverseengineering and configured to receive input data (SGi, RNi, INi, INj) and to provide output data (PXi, PXj), each of the input and output data having invalid values and two randomly-selected valid values corresponding to two respective randomly-selected binary states; executing the software component by the user terminal to generate the output data; receiving a decryption mask (IMSK) by the user terminal; and determining, by the user terminal, the binary states of the output data by combining a bit of each output data with a respective bit of the decryption mask, by an Exclusive OR operation, the secret data comprising the binary states of the output data.

Fig. 4

EP 3 319 068 A1

**Description**

TECHNICAL FIELD

The present invention relates to a method and device for securely authenticating a user from a non-secure terminal, and for executing a secure transaction involving such a non-secure terminal and a remote server, based on such a user authentication.

BACKGROUND

It would be desirable to execute transactions, for instance e-commerce transactions or fund transfer, initiated from mobile terminals such as smartphones, personal computers, digital tablets, or the like, or any other connected device including devices belonging to the Internet of Things (IoT) (Not sure this is pertinent since the claimed method requires a human). However, this raises security problems, notably because "malicious software" or "malware" may be executed by the main processor (CPU) of the terminal. The malware may be able to access to all or a part of the memories accessible by the main processor, and thus may be maliciously configured to spy on any transactions executed by the terminal and to recover any secret data manipulated during these transactions for transmission over the network.

To ensure the security of such transactions, it has already been proposed to entrust cryptographic computations to a dedicated secure element, such as the processor of a UICC ("Universal Integrated Circuit Card") card, e.g. a SIM (subscriber identification module) card with which cell phones are generally equipped. In order to be able to execute one or more payment applications, the secure processor must be able to store as many secret cryptographic keys as there are payment applications. However, loading an application into the memory of a secure processor is a complex operation that needs to be highly secure. Specifically, it involves external parties such as Trusted Service Managers. Since SIM cards are issued by cell phone operators, the latter may refuse to have such applications installed in the card. Furthermore, in the event of theft, or during maintenance of the telephone, the processor of the SIM card may be hacked by a hacker seeking to discover the secret keys stored in its memory.

In addition, accessing the secure functions installed in the processor of a SIM card generally entails inputting a secret code (PIN code) by means of a keypad or a touch-sensitive surface connected to the main processor of the terminal. In a classical configuration, the secret code input by the user necessarily passes through the main processor. Malware executed by the main processor can therefore access this secret code.

The patent application WO2012/107698 filed by the Applicant discloses a method using a graphic processor of the terminal as a secure element to perform transaction. This method comprises steps of establishing a secure communication link between the graphic processor of the terminal and an authentication server, and displaying a virtual keypad with keys arranged in a random order. The image of the keypad is displayed using visual cryptography, by successively displaying complementary frames in which the labels of the keys are not intelligible, the complementary frames being combined into an intelligible image by the visual system of the user thanks to the retinal remanence thereof. In this way, even if a malicious program running on the main processor of the terminal is able to access the positions of the keys touched by the user during input of a secret code, it cannot, by taking a succession of screenshots, determine which labels correspond to the touched keys.

However, this method requires important calculation resources that are not available in all portable devices such as all of the existing smartphones on the market.

To secure transactions performed using a terminal connected to a web site, it has been proposed to use a single-use secret code which is transmitted to the user each time a transaction needs to be validated. According to a first solution the single-use secret code is transmitted to the user via a distinct communication channel, e.g. via a phone link or SMS (Short Message Service), the user being required to input the received secret code on the terminal to validate the transaction. Another known solution provides an additional hardware device to each of the users, this device generating the single-use secret code after an authentication of the user by means of credentials such as a password or biometric data. These solutions are burdensome for the users who do not always have nearby a phone or mobile or wireless network coverage, or this hardware device, when they are required to validate a transaction. The solution requiring an additional hardware device is costly for the banking organizations. In addition, the solution using a secret code transmitted by SMS obviously does not provide sufficient high security level since it has already been subjected to successful attacks.

Therefore, it may be desirable to propose a method for securely transmitting a secret data to a user by means of a non-secure user terminal. It may also be desirable to protect secret data input by users and transaction data transiting through such a non-secure terminal. Further, it may desirable to make the proposed method compatible with all existing terminals, even with terminals of low computation power.

SUMMARY

A method is disclosed for securely transmitting a secret data to a user, the method comprising: receiving by a user terminal, from a secure processor, a software component protected against tampering and reverse-engineering and configured to receive input data and to provide output data, each of the input and output data having invalid values and two randomly-selected valid values corresponding to two respective randomly-selected binary states; executing the software component by the user terminal to generate the output data; receiving a decryption mask by the user terminal; and determining, by the user terminal, the binary states of the output data by combining a bit of each output data with a respective bit of the decryption mask, by an Exclusive OR operation, the secret data comprising the binary states of the output data.

According to an embodiment, the secret data is an image to be displayed by the user terminal, the software component being configured to generate an encrypted image comprising encrypted pixels, the decryption mask being configured to generate a decrypted image from the encrypted image.

According to an embodiment, the decryption mask is configured to insert a message to be displayed to the user, into the decrypted image.

According to an embodiment, the software component is configured to generate one set of pixels having a probability lower than 100% to be in a visible or invisible state, the software component being executed by the user terminal, at a rate corresponding to a display refresh rate of frames displayed by the user terminal, to generate the pixel set at the display refresh rate, the method further comprising: Inserting, by the user terminal, the pixel set generated by each execution of the software component into one respective image frame; and displaying the image frames, the image frames including unintelligible information formed of the pixel set inserted into the image frames, the unintelligible information becoming intelligible to a user at the display refresh rate thanks to the persistence of the human visual system.

According to an embodiment, the software component is encoded as a garbled circuit comprising circuit inputs, circuit outputs, logic gates and wires, each logic gate having two inputs and one output, each wire having a first end connected to one of the circuit inputs or to one of the logic gate outputs and a second end connected to one of the logic gate inputs or to one of the circuit outputs, the garbled circuit being generated by selecting a valid data for each binary state of each of the wires, and by computing for one logic gate of the garbled circuit, truth table values as a function of each valid data of each input of the logic gate, each valid data of the output of the logic gate and a logic operation performed by the logic gate.

According to an embodiment, the software component comprises one pixel set generation circuit for each pixel set to generate, each generation circuit comprising a first logic gate and a set of second logic gates, the first logic gate combining a first input data to a randomly selected second data, and providing an output data to a first input of each of the second logic gates, a second input of each of the second logic gates receiving a third input data, each of the outputs of the second logic gates providing a pixel value of the set of pixels.

According to an embodiment, one of the pixel set generation circuits comprises several first logic gates, receiving first input data and randomly-selected second input data, and providing the output data to each of the second logic gates.

According to an embodiment, the software component is configured to provide the output data in one of the two binary states with a probability set to 50%, or comprised between 12.5% and 87.5%.

Embodiments may also relate to a method for securely transmitting a secret data from a user to a secure processor, the method comprising: securely displaying a secret challenge to a user by means of a user terminal, according to the previously defined method; acquiring data introduced by the user in the user terminal, in relation with the displayed secret challenge; transmitting by the user terminal, the data introduced by the user, to the secure processor, a secret data known by the user being determinable from the data introduced by the user and from the secret challenge.

Embodiments may also relate to a user terminal configured to: receive from a secure processor, a software component protected against tampering and reverse-engineering and configured to receive input data and to provide output data, each of the input and output data having invalid values and two randomly-selected valid values corresponding to two respective randomly-selected binary states; execute the software component to generate the output data; receive a decryption mask; and determine the binary states of the output data by combining a bit of each output data with a respective bit of the decryption mask, by an Exclusive OR operation, the secret data comprising the binary states of the output data.

According to an embodiment, the terminal is configured to execute the operations performed by a terminal in the previously defined methods.

According to an embodiment, the secure processor is a secure element connected to a main processor of the terminal.

According to an embodiment, the secure processor belongs to a remote server linked to the terminal through a data transmission network.

Embodiments may also relate to a secure element configured to execute the operations performed by a secure processor in the previously defined methods, the secure element being connected to a main processor of a terminal.

Embodiments may also relate to a server configured to execute the operations performed by a secure processor in the previously defined methods, the server being linked to the terminal through a data transmission network.

Embodiments may also relate to a computer program product loadable into a computer memory and comprising code portions which, when carried out by a computer, configure the computer to carry out the operations performed by the previously defined user terminal.

BRIEF DESCRIPTION OF THE DRAWINGS

The method and/or device may be better understood with reference to the following drawings and description. Non-limiting and non-exhaustive descriptions are described with the following drawings.

Figure 1 is a block diagram of user terminals performing transactions with remote servers;

Figure 2 is a block diagram of a user terminal;

Figure 3 is a sequential diagram of initialization steps performed by a user terminal, an authentication server and an application server, according to an embodiment;

Figure 4 is a sequential diagram showing authentication steps, according to an embodiment;

Figure 5 is a block diagram of a database managed by the authentication server, according to an embodiment;

Figures 6A and 6B represent respectively an image frame displayed by the user terminal, and a corresponding resultant image which can be observed by a user of the user terminal, according to an embodiment;

Figure 7 represents two layers of a part of an image frame which are displayed superimposed by the user terminal, a corresponding part of a resultant image frame which is displayed by the user terminal, and a corresponding part of a resultant image which can be observed by a user of the user terminal, according to an embodiment;

Figure 8 is a block diagram of an application program executed by the user terminal, according to an embodiment;

Figure 9 is a block diagram of a circuit implemented by software in the user terminal, according to an embodiment;

Figure 10 is a block diagram of a database describing the circuit implemented in the user terminal, according to an embodiment;

Figure 11 is a block diagram illustrating a processing performed by the application program for displaying the image frame of Figure 6A, according to an embodiment;

Figure 12 is a block diagram of a part of the circuit of Figure 9, according to another embodiment;

Figure 13 is a sequential diagram showing authentication steps, according to another embodiment.

DETAILED DESCRIPTION

In the figures, like referenced signs may refer to like parts throughout the different figures unless otherwise specified.

In the following, the term "secure" is employed according to its plain meaning to those of ordinary skill in the art and encompasses, in different embodiments, security arising from techniques such as encryption, or other types of software or hardware control used to isolate information from the public or to protect it against unauthorized access or operation. The expressions "secure communication" and "secure communication link" refer to communications that are encrypted using public/private key pairs, or symmetrical key encryption with keys shared between communicating points. "Secured communications" can also involve virtual private networks, and other methods and techniques used to establish authenticated and encrypted communications between the communicating points.

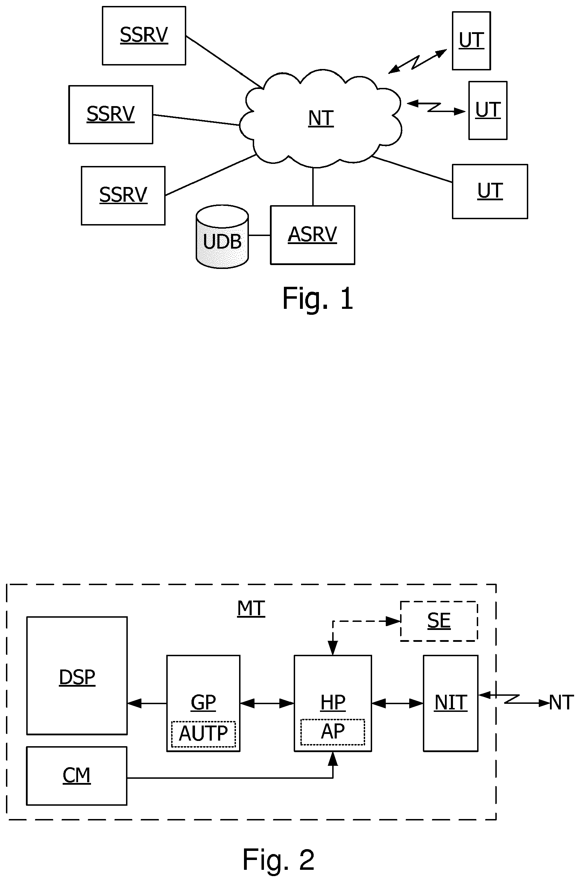

Figure 1 represents user terminals UT that can perform transactions with remote service provider servers or application servers SSRV through communication networks NT. In the following, the term "user terminal" shall be synonymous and refer to any device that can communicate with one or more remote servers such as application servers and service provider servers. Thus, the user terminals can be for instance mobile phones, smartphones, personal computers and digital tablets equipped with communication circuits. The communications networks may include IP (Internet Protocol) networks, such as Internet, mobile or cellular networks, wireless networks, and any kind of network that can be used to establish a communication link between a user terminal and a remote server.

According to an embodiment, an authentication server ASRV is configured to implement a method for authenticating a user during transactions involving an application or service provider server SSRV and a user terminal UT, based on a two-factor authentication scheme.

Figure 2 represents a conventional terminal UT, comprising communication circuits NIT for communicating with a remote server such as the server ASRV, through a transmission network such as the network NT. The terminal UT can be a cellular phone, a smartphone or a PDA (Personal Digital Assistant) or any other device such as a digital tablet or a personal computer including communication circuits to be connected to a network such as Internet network. The user terminal UT further comprises a main processor HP (also called "Central Processing Unit" - CPU) connected to the communication circuits NIT, a display screen DSP, a graphic processor GP connected to the processor HP and controlling the display screen DSP, and a control device CM connected to the processor HP. The control device can include a keyboard or keypad, or a touch-sensitive surface, e.g. transparent and disposed on the display screen DSP. The control device CM can further include a pointing device such as a mouse, a pencil or a pen.

The terminal UT can further comprise a secure element SE, such as a secure processor that can be standalone or embedded into a smartcard UICC. The secure processor SE can be for example a SIM ("Subscriber Identity Module") card, providing an access to a cellular network. The secure processor SE can include an NFC ("Near Field Communication") circuit to communicate with a contactless reader. The NFC circuit can be embedded into a SIM card (SIM-NFC) or UICC, or in a SoC ("System on Chip") circuit, or in an external memory card, for example an "SD card". The circuits NIT can include a mobile telecommunication circuit giving access to a mobile cellular network and/or to the Internet network, through the cellular network, and/or a wireless communication circuit (Wi-Fi, Bluetooth™, ...), and/or any other wired or wireless connection circuit that can be linked to a data transmission network such as Internet.

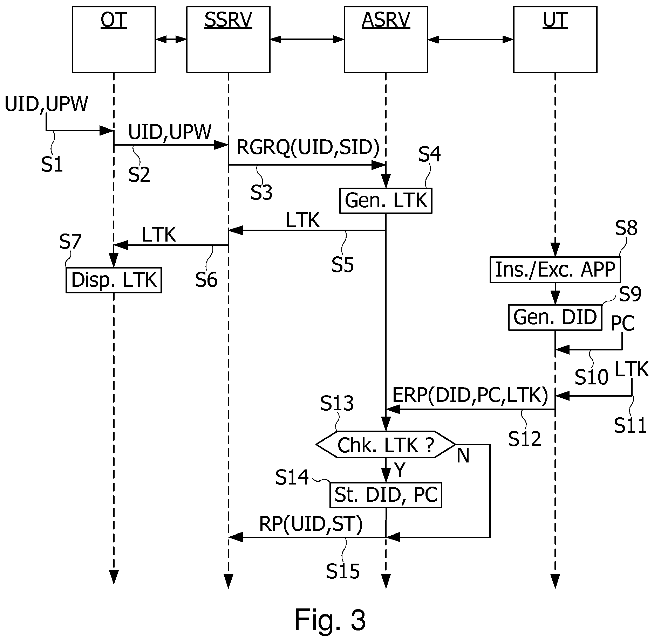

Figure 3 represents registration steps S1 to S 14 for registering a user terminal UT to be used for authenticating a user to validate a transaction. Steps S1 to S7 are successively performed. At step S1, the user connects a user terminal OT to the server SSRV of the service provider, e.g. to a web site of the service provider, and provides credentials, such as a user identifier UID and a corresponding password UPW to the server SSRV. At step S2, the user credentials UID, UPW are transmitted by the terminal OT to the server SSRV. At step S3, the server SSRV checks the received credential UID, UPW and if they correspond to a valid registered user, the server SSRV sends to the authentication server ASRV, a registration request RGRQ containing the user identifier UID and a service identifier SID related to the service provider server SSRV. The communication link between the servers SSRV and ASRV is secured, such that a hacker cannot retrieve the transmitted data. The following steps performed by the server ASRV are executed by a secure processor of the server ASRV or within a secure domain thereof. Besides, the links between the terminals OT and the server SSRV and between the terminal UT and the server ASRV is not required to be secure links.

At steps S4 and S5, the authentication server ASRV generates a single-use link token LTK (dedicated to registration of the user identified at step S2) and transmits it to the server SSRV in response to the registration request RGRQ. The link token LTK establishes a link between the received user identifier UID and the service identifier SID. The link token LTK has a time-limited validity that may be fixed to a value between several minutes out several hours. At step S6, the server SSRV receives the link token LTK and transmits it to the terminal OT. At step S7, the terminal OT displays the link token LTK.

Steps S8 to S13 are successively performed. At step S8, the user downloads and installs an application APP dedicated to user authentication in a user terminal UT to be used for authentication and involving the authentication server ASRV. The terminal UT may be the terminal OT or another terminal. Steps S9 to S13 are performed at a first execution of the application APP. At step S9, the application APP generates a unique device identifier DID of the terminal UT. Then, the user is invited to choose a password PC and to input the link token LTK received and displayed at steps S6, S7. At steps S10 and S11, the user inputs a password PC and the link token LTK. The link token LTK may be displayed in the form of an optical code, such as a QR code, and captured on the display screen of the terminal OT by the application APP using the camera of the terminal UT. At step S12, the application APP transmits a registration message ERP to the authentication server ASRV, this message containing the device identifier DID, the password PC and the link token LTK. At step S13, the server ASRV checks the validity of the received link token LTK. A link token is considered invalid, when its validity period has elapsed, or when it has been already used to identify a device. If the link token is valid, the server ASRV stores the device identifier DID and the password PC in a user database UDB at step S14. At step S15, the server ASRV transmits a message RP in response to the request RGRQ to the service provider server SSRV. The message RP contains the user identifier UID and a status of the registration depending on the validity check of the link token performed at step S 13.

If the check performed at step S 13 succeeds, the user terminal UT is registered by the server ASRV and thus can be used as a second authentication factor, the authentication of the user by the service provider server SSRV being considered as a first authentication of the user.

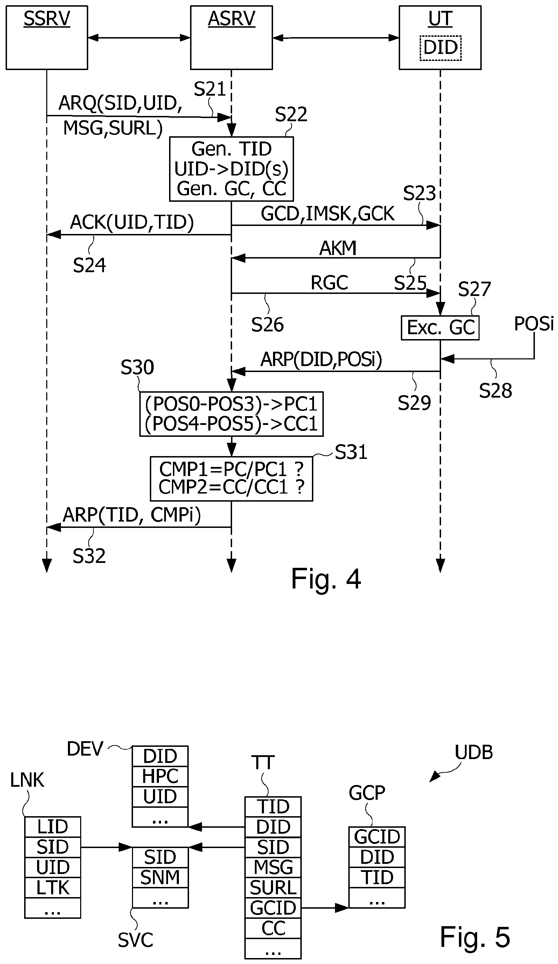

Figure 4 represents authentication steps S21 to S32, which are successively performed to authenticate the user during a transaction. At step S21, the service provider server SSRV transmits an authentication request ARQ to the authentication server ASRV. The authentication request ARQ contains an identifier SID of the service, an identifier UID of the user involved in the transaction, a message MSG to be displayed to the user and presenting information related to the transaction to be validated by the user, and an address SURL where a result of the authentication is to be transmitted by the authentication server ASRV.

At step S22, the authentication server ASRV receives the request ARQ, and generates a unique transaction identifier TID. The authentication server ASRV further searches the database UDB for device identifiers DID corresponding to the user identifier UID, and generates a transaction validation code CC, preferably of single-use, and a distinct dedicated software component GC for each of the user terminals UT corresponding to the devices identifiers DID found in the database UDB. Since the software component GC is designed to display the validation code CC, it is specific to this code. At step S23, the server ASRV sends to the terminal UT structure and content data GCD defining the software component GC and including input data of the software component in an encrypted form, a final mask IMSK to be applied to image frame parts generated by the software component circuit, and a cryptographic data GCK to be used to execute the software component. At step S24, the server ASRV sends an acknowledge message ACK to the server SSRV, this message containing the user identifier UID and the transaction identifier TID. At step S25, the application APP executed by the terminal UT receives the data GCD, IMSK, GCK related to the software component GC and transmitted at step S23, and sends an acknowledge message AKM to the server ASRV. If the application APP is not currently running on the terminal UT, the reception of the data related to the software component may trigger the execution of the application APP. At step S26, the server ASRV sends to the terminal UT a request RGC to execute the software component GC. At step S27, the reception of the notification RGC triggers the execution by the application APP of the software component GC which displays image frames showing for example a keypad having keys, the message MSG and the single-use transaction validation code CC, for example of two or more digits.

According to an embodiment, the keys of the keypad are arranged in a randomly selected layout in the displayed frames, and only parts of labels of the keys and of the validation code are displayed in each frame, such that the key labels and the validation code are intelligible only to the human visual system thanks to the persistence of the latter, but not in screenshots of the display screen DSP. According to an embodiment, the validation code CC is superimposed on the message MSG (or vice-versa), such that the message cannot be changed without disturbing the validation display.

At step S28, the user of the terminal UT inputs the password PC and the displayed validation code CC. In the example of a smartphone, the user uses the displayed keypad, and touches corresponding positions POSi of the keys of the displayed keypad. At step S29, the application APP transmits the sequence of positions POSi selected by the user with the device identifier DID to the server ASRV. At step S30, the server ASRV determines the password PC1 and the code CC1 corresponding to the positions POSi typed by the user. Since the keypad used to input the positions POSi was displayed by the software component GC which was generated by the server ASRV, the server ASRV knows the displayed keypad layout and thus can determine the keys labels corresponding to the positions POSi, and consequently the values of the password and validation code typed by the user. At step S31, the server ASRV compares the entered password PC1 and validation code CC1 with the ones (PC, CC) stored in the database UDB in association with the device identifier DID. For security reasons, the database UDB may only store a hash value HPC instead of a clear value of the password PC entered at step S10, the comparison operation of the password PC being performed by applying a hash function to the typed password PC1 and by comparing the result of the hash function with the hash value HPC of the password PC stored in the database UDB. At step S32, the server ASRV transmits to the service provider server SSRV using the address SURL, an authentication response containing the user identifier UID and the result of the comparisons performed at step S31. In this way, the user corresponding to the identifier UID is authenticated and the transaction TID may be validated only when the typed password PC1 and validation code CC1 match the password PC stored in the database UDB and the validation code CC corresponding to the software component GC sent by the server ASRV to the user terminal UT at step S23.

In one embodiment, the input of the password PC at step S10 is performed by executing twice the steps S27 to S30 using two different software components to get two passwords from the user. After each execution of steps S27 to S30, the validation code CC 1 is checked and the password PC 1 entered by the user is validated by the server ASRV only if the validation code CC1 entered by the user is the same as the validation code CC displayed by the user terminal UT executing one software component GC. After two successful executions of steps S27 to S30, each providing a validated password PC1, the validated passwords PC1 entered during the first and second execution of the steps S27 to S30 are compared, and if they are identical, the password PC1 is stored in the database UDB to assign it to the user terminal UT. In addition, steps S11 to S15 are executed only once the password PC1 entered by the user is stored in the database UDB. In this way, only the positions POSi typed by the user are transmitted from the user terminal UT to the server ASRV. Therefore, a malware installed in the terminal UT or a man-in-the-middle attack between the server ASRV and the user terminal UT cannot discover the typed codes PC and CC without executing the software component. If this happens, the hacker performing the attack, must send a message ARP to the server ASRV (as in step S29). Thus the server ASRV can receive two messages ARP for a same transaction or from the same user terminal UT, one from the authenticated user and one from the hacker, and can invalidate the transaction.

According to an embodiment, the message ARP is transmitted by the user to the server ASRV (step S29) by another transmission channel.

Figure 5 represents different tables DEV, LNK, SVC, TT, GCP of the database UDB. The table DEV contains one record for each registered user device or terminal UT, each record comprising a device identifier DID, the password PC entered by the user at step S10 or a hash value HPC thereof, and the corresponding user identifier UID. The table SVC contains one record for each registered service provider, each record of the table SVC comprising a service identifier SID and a service name. The table LNK contains one record for each link token generated at step S4, each record comprising comprises a link identifier LID which is generated with the link token LTK at step S4, the service identifier SID of the server SSRV requesting the link token at step S3, the user identifier UID of the user having triggered the link token request RGRQ at step S2, the link token value LTK, and a validity period of the link token. The table TT contains one record for each current transaction, each record comprising a transaction identifier TID, a device identifier DID, a service identifier SID, the message MSG to be displayed by the application APP executed by the terminal having the identifier DID, the address SURL provided at step S21, an identifier GCID identifying the software component generated for the transaction TID, and a single-use transaction validation code CC. The table GCP contains one record for each software component generated by the server ASRV, each record comprising an identifier GCID identifying the software component, a device identifier DID of the device UT for which the software component was generated at step S22, and the identifier TID of the transaction for which the software component was generated. Since the software components are dedicated to one transaction and consequently generated and executed for only one user authentication, the records corresponding to an already ended transaction can be deleted from the table GCP, but they may be kept for statistical purposes or to ensure the unicity of each transaction.

The operation of checking the received link token at step S13 can be performed by comparing the received link token LTK with the token stored at step S4 in the table LNK. The received link token must be retrieved in a record of the table LNK in relation with a user identifier UID having a device corresponding to the device identifier DID received by the server ASRV at step S12, and according to the table DEV. If not the case, the received link token is considered as invalid and the user terminal UT is not registered in the table DEV.

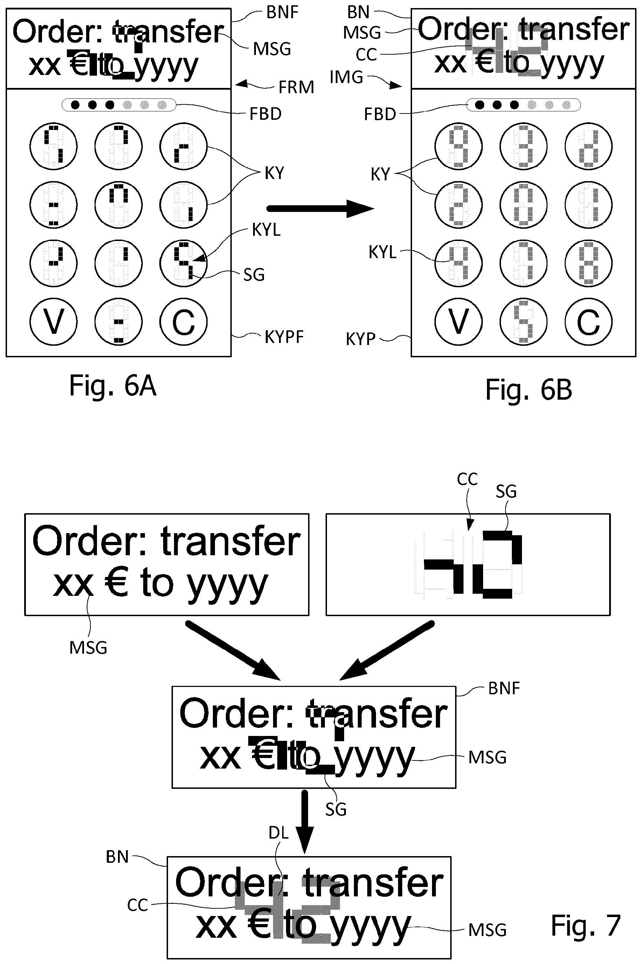

Figure 6A represents an example of an image frame FRM displayed by the user terminal UT when it executes the software component GC. The image frame FRM comprises a banner frame BNF displaying the message MSG and the single-use code CC superimposed on the message MSG. The image frame FRM further comprises a keypad image frame KYPF showing for example a twelve-key keypad, each key of the keypad being displayed with a label KYL indicating the function of the key to the user. The keypad comprises an erase key "C" and a validation key "V", and ten keys corresponding to a digit, and having a layout specific to the software component GC which generates the image frame FRM. The image frame FRM may further comprises a display zone FBD where a dot is displayed each time the user touches a new one of the keys KY. In the example of Figure 6A, the display zone FBD shows that three keys were already typed by the user.

In the example of Figure 6A, the keypad comprises four lines of three keys, the first line of the keypad comprising (from left to right) the digits "9", "3" and "6", the second line comprising the digits "2", "0" and "1", the third line comprising the digits "4", "7", and "8" and the fourth line, the validation key "V", the digit "5" and the erase key "C". The label KYL of each digit key is displayed by several segments SG (e.g. seven segments), visible or not, according to the key label KYL to be displayed. According to an embodiment, to prevent the keypad layout from being acquired using a screenshot function of the terminal UT, only a part of the visible segments in each key KY is displayed in each image frame generated by the software component GC. To this purpose, each visible segment to be displayed is present in an image frame FRM generated by the software component GC with a probability lower than 100%, for example equal to 50%. Thanks to its persistence property, the human visual system combines the image frames successively displayed by the terminal UT. Thus the displayed key labels KYL become intelligible to the user. Figure 6B represents the displayed image IMG as it is perceptible by the human visual system when the image frames FRM generated by the software component GC are displayed at a sufficiently high frequency (greater than 30 Hz) for example at 60 Hz, such that a new frame generated by the software component is displayed every 16.6 ms. As shown in Figure 6B, the key labels KYL appear in grey to a user when visible segments to be displayed of the key labels are inserted in the frames FRM with a probability lower than 100%.

Figure 7 at the top shows one example of two superimposed layers of the banner frame BNF produced by the software component GC and displayed by the terminal UT. The central part of Figure 7 shows the banner frame as it is generated and displayed. The bottom part of Figure 7 shows the banner BN as it can be perceived by the user. The first layer of the banner frame BNF (at the top left of Figure 7) comprises the message MSG "Order: transfer xx € to yyyy" to be displayed. The second layer (at the top right of Figure 7) comprises a two-digit number corresponding to the validation code CC to be entered by the user in the terminal UT. Here again, each digit of the validation code CC is displayed using several segments SG (e.g. seven segments) which are displayed or not as a function of the digit to be displayed. To prevent the validation code CC from being acquired using a screenshot function of the terminal UT, only a part of the visible segments SG is displayed in each image frame FRM generated by the software component GC, such that each visible segment SG to be displayed is present in an image frame FRM generated by the software component GC with a probability lower than 100%, for example equal to 50%. The pixels of the first and second layers may be combined together by a XOR operation. Thus, in the generated banner frame BNF as shown in the central part of Figure 7, the pixels belonging both to the message MSG and to a segment of the validation code CC, are displayed in the background color, when the message and the segment are displayed in a color different from the background color.

The bottom part of Figure 7 represents the displayed banner BN as it is perceptible by the human visual system, when the image frames FRM generated by the software component are displayed at a sufficiently high frequency (greater than 30 Hz) for example at 60 Hz, such that a new frame FRM is displayed every 16.6 ms. The two digits labels DL of the validation code CC appear in grey to the user, when visible segments to be displayed are inserted in the banner frames BNF with a probability lower than 100%.

According to an embodiment, visible and invisible segments of each digit KYL, DL to be displayed appear in the frames FRM with respective probabilities such that the displayed digits are intelligible for the human visual system, thanks to the persistence of the latter. For example, the generated software components GC are configured to display the invisible segments with a probability of 0 to 15%, and the visible segments with a probability of 50 to 100%. The visible segments forming a key label KYL or a digit of the validation code CC can be displayed with respective probabilities comprised between 50 and 100%, and the invisible segments in a key label or a digit of the validation code CC can be displayed with respective probabilities comprised between 0 and 15%. The display probabilities of the segments forming the digits of the key labels and the validation code CC can be adjusted as a function of the frame display frequency, such that the labels of the displayed digits remain intelligible for the human visual system. Segments or pixels are invisible or visible in the image frame FRM when they are displayed respectively with a background color of the image frame, or with a color different from the background color. The background color is defined by the color of the pixels around the considered segment SG, and may vary as a function of the position of the segment within the image frame FRM.

The displayed keypad KYPF may not need to have a validation key "V", the validation of the typed codes being performed when the user inputs the last digit of the password PC and validation code CC to be typed. For example, if the password PC comprises four digits and the validation code CC two digits, the execution of the software component GC can be ended when the user inputs six digits. The cancel key "C" can be managed either to delete the last typed digit or all the previously typed digits. The effects of the cancel key "C" may be shown to the user by erasing one or all dots in the display zone FBD.

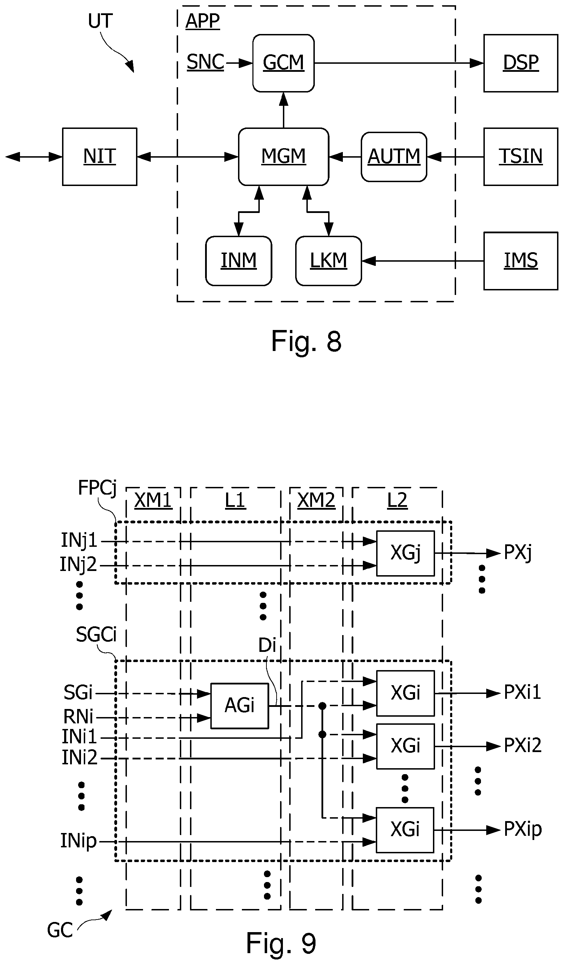

Figure 8 represents a functional architecture of the application APP, according to an embodiment. The application APP comprises a management module MGM, an initialization module INM, an authentication module AUTM, a link module LKM, a software component execution module GCM. The management module MGM controls the other modules INIM, RGM, LKM and GCM, and the communications between the application APP and the server ASRV through the communication circuits NIT. The initialization module INM performs step S9. The link module LKM performs steps S11 and S12. To this purpose, the link module can be connected to an image sensor IMS of terminal UT to acquire an optical code corresponding to the link token LTK to be received by the terminal UT, and displayed by the terminal OT. The authentication module AUTM performs steps S25 to S29 to process the authentication request received at step S23, to trigger the execution of the software component GC, and to receive and transmit the positions POSi typed by the user. The module AUTM is connected to the keypad or a touch-sensitive surface TSIN of the terminal UT. The module GCM performs the step S27 to generate and display the image frames FRM at a suitable refresh rate, the module GCM selecting at each frame, input values to be applied to the software component GC and executing the latter. The module GCM produces the image frames FRM which are displayed on the display screen DSP of the terminal UT.

Figure 9 represents an example of a software component GC according to an embodiment. The software component GC is a software-implemented Boolean circuit encrypted as a garbled circuit. The software component GC comprises two circuit layers L1, L2, and two interconnection matrices XM1, XM2. A first interconnection matrix XM1 receives input data INi, INj, SGi, RNi of the software component GC. The first layer L1 comprises logic gates AGi, each gate receiving two input values SGi, RNi from the matrix XM1 and providing one output value Di to the second interconnection matrix XM2. The second layer L2 comprises logic gates XGi, XGj, each gate receiving two input values from the matrix XM2, and providing one output value PXi, PXj representing a pixel value. Each id the logic gates AGi of the first layer L1 receives input values SGi, RNi of the software component GC, selected by the matrix XM1. Each of the logic gates XGi of the other layer L2 receives one input value INi of the software component and one output value provided by one logic gate AGi belonging to a previous layer (L1), these input values being selected by the matrix XM2. Each of the logic gates XGj of the layer L2 receives two input values INj1, INj2 of the software component, these input values being selected by the matrix XM1 and/or XM2. This structure of the software component enables parallel processing, since all logic gates in a same circuit layer L1, L2 can be processed at the same time.

According to an embodiment, to generate image frames FRM as shown in Figure 6A, the software component GC comprises one circuit SGCi for each of the segments SG that can be visible or invisible in the image frames FRM, and one circuit FPCj for each pixel PXj distinct from a segment pixel PXi, for example around the segments SG or in the banner frame BNF. Thus, when the image frames FRM to be displayed comprise 70 segments (10 key label digit x 7 segments per digit) for the keypad KYP, plus 14 segments (2 digits x 7 segment per digit) for the validation code CC, the software component comprises 84 circuits SGCi. Each of the circuits SGCi comprises one logic gate AGi in the circuit layer L1, and as much logic gates XGi in the circuit layer L2, as the number of pixels PXi1, PXi2, ... PXip forming the segment SG as displayed in the image frames FRM.

The gate AGi performs for example a logical operation such as AND, OR, NAND, NOR, to display each visible segment with a probability of 50%, and each invisible segment with a probability of 0% to be visible. Each of the gates XGi performs a logical XOR operation with an input INi of the software component. The gate AGi receives one segment input value SGi and a corresponding random input value RNi. The output Di of the gate AGi is connected to an input of all gates XGi of the circuit SGCi. Each gate XGi also receives one of the input values INi1-INip and provides one pixel value PXi1-PXip to the output of the circuit GC.

Each of the circuits FPCj comprises one logic gate XGj performing a logical XOR operation per pixel PXj controlled by the software component GC and distinct from a segment pixel in the image frames FRM. Each of the gates XGj receives two input values INj1, INj2 of the software component GC and provides one pixel value PXj. Each of the gates XGj can be located either in layer L1 or in layer L2. The number of input values INi, INj can be limited to a value around the square root of the number of pixels PXi, PXj controlled by the software component GC.

The circuits SGCi are configured to display the visible segments of the digits of the key labels KYL and validation code SG with a probability of 50% and the invisible segments of these digits with a probability of 0%. The structure of the software component GC can be adapted to apply other display probabilities to the visible and invisible segments of the digits to be displayed. Of course, the digits can also be controlled and/or arranged (e.g. with more segments) to display other signs than numbers such as alphabetic characters or more generally symbols including ASCII characters.

In the example of the software component of Figure 9, one input INi or INj can be connected to several logic gates XGi, XGj, such that there are fewer inputs INi, INj than the number of logic gates XGi plus twice the number of logic gates XGj.

The interconnection matrix XM2 defines which pixel generated by the software component belongs to a segment SG. According to one embodiment, the position, orientation and shape of each segment SG are varied by one or several pixels, depending on the display resolution of the user terminal, from one software component to another. This provision makes it more difficult to perform a machine optical recognition of the displayed symbols.

It may be observed that the term "segment" as used herein designates a set of pixels that are controlled by a same one of the segment input values SGi. The set of pixels forming a segment is not necessarily formed of adjacent pixels, but can comprise groups of adjacent pixels as the segments forming a key label KYL. In addition, the pixels forming a segment are all visible or all invisible in one displayed image frame FRM.

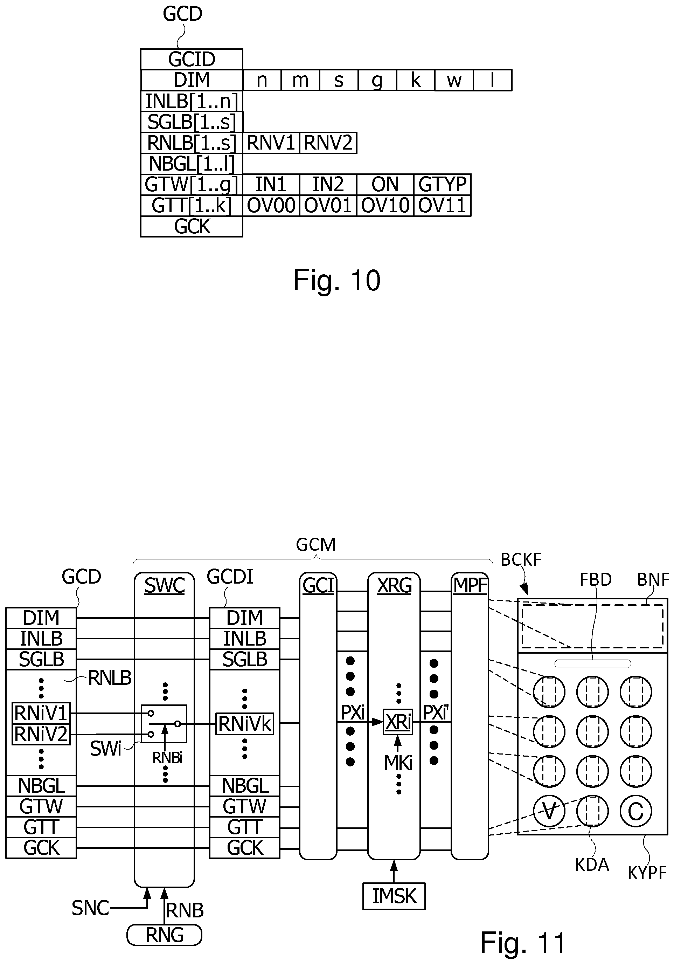

Figure 10 represents the structure and content data GCD defining the software component (which is transmitted at step S23), when it is designed as a garbled circuit, according to an embodiment. The data GCD comprises:

a unique software component identifier GCID,

a number set DIM comprising a number n of input values INi, INj, a number of output values m, a number s of segment input values SGi or random input values RNi, a number g of gates AGi, XGi, XGj, a number k of gates AGi, a number w of wires in the circuit, and a number 1 of circuit layers L1, L2 in the circuit GC,

an input data table INLB comprising all values of the inputs INi, INj of the circuit GC, for example numbered from 1 to n, as specified for the execution of the software component,

a segment table SGLB comprising all values of the segment inputs SGi of the software component GC, numbered from 1 to s, as specified for the execution of the software component,

a random data table RNLB comprising the random values RNi, numbered from 1 to s,

a gate wire table GTW defining two input wires numbers IN1, IN2, an output wire number ON and a type identifier GTYP of each logic gate AG, XG of the software component GC, the gates of the circuit being numbered from 1 to g, and

a gate truth table comprising four values OV00, OV01, OV10, OV11 for each of the logic gates AG of the software component GC.

In the example of Figure 9, the type GTYP specifies that the corresponding logic gate performs either an XOR operation or another logical operation such as AND, OR, NOR, NAND.

According to an embodiment, the input values INi, SGi, RNi, INj and the output values Di, PXi, PXj of the logic gates AGi, XGi, XGj, each representing a binary logical state 0 or 1, are defined by numbers of several bits, for example 64 or 128 bits. In this way, each input and output within the garble circuit GC has only two valid values, and all the other possible values, when considering the size in bits of these values, are invalid. When the software component GC is generated, the two valid values of each input SGi, RNi, INi, INj of the software component are randomly chosen, provided that the least significant bit of the two valid values are different, these least significant bits being used, when computing the output value of one of the logic gates, to select one value in the truth table of the logic gate.

The truth table GTT[i] of each logic gate AGi, comprises four values OV00, OV01, OV10, OV11, each corresponding to a combination (0, 0), (0, 1), (1, 0), (1, 1) of binary input values corresponding to the input values of the logic gate. The topology of the software component may be defined in the table GTW, by numbering each wire of the software component, i.e. each input wire of the software component from 1 to (n+2s) and each output of the logic gates from (n+2s+1) to (n+2s+g), and by associating to each logic gate AGi, XGi, XGj one record of the table GTW comprising two wire numbers IN1, IN2 to the two inputs of the gate and one wire number ON to the output of the gate. The wire numbers of the outputs of the software component GC are numbered from (n+2s+g-m+1) to (n+2s+g).

According to an embodiment, the table RNLB contains both valid values RNV1, RNV2 of each of the random values RNi, corresponding to the logical states 0 and 1. Each value RNV1, RNV2 can be equal with a same probability to either one or the other of the two valid values of the random value RNi corresponding respectively to the states 0 and 1.

The XOR gates XGi, XGj can be executed either by using a truth table which is encoded in the table GTT or by applying XOR operations to each pairs of bits of same rank in the input values of the gate. In the latter case, the field GTYP of the table GTW defines whether the gate is a XOR gate or another gate, and the table GTT comprises one record for each gate AGi only.

According to an embodiment, each value in the tables INLB, SGLB, RNLB, GTT is encoded by a 128-bit word, and each record of the table GTW is encoded on a 64-bit word, the wire numbers IN1, IN2, ON being encoded on 21-bit words. The table GTW can be transmitted from the server ASRV to the terminal UT in a compressed form, for example using the gzip compression scheme.

According to an embodiment, the order of the logic gates in the gate tables GTW, and GTT can be defined randomly, provided that the table records GTW[i] and GTT[i] at the index i refer to the same gate.

Figure 11 represents the module GCM, configured to execute a software component and to generate the image frames FRM, according to an embodiment. The module GCM executes the software component each time a new image frame is to be generated, i.e. at a frame refresh rate equal to or greater than 30 Hz. To this purpose the module GCM can be activated by a synchronization signal SNC having for example a rising edge each time a new image frame must be generated. The module GCM comprises a switching module SWC, a software component interpreter GCI, an XOR masking circuit XRG and a pixel mapping module MPF. The switching module SWC receives the synchronization signal SNC and the structure and content data GCD defining the software component GC to be executed, and loads the data to be processed by the next execution of the software component GC in an input data structure GCDI. Thus, the switching module SWC transmits the data DIM, INLB, SGLB, NBGL, GTW, GTT and GCK without modification to the structure GCDI.

According to an embodiment, the switching module SWC performs switching operations SWi to select one or the other of the two valid values RNiV1, RNiV2 of each input random value RNi. Each switching function SWi is controlled by a respective bit RNBi of a random number RNB having s bits, generated by a random number generation function RNG, s being the number of the random values RNi to be input to the software component GC or the total number of segments SGi of all the digits to be displayed. Each switching operation SWi provides for each of the random values RNi a randomly selected value RNiVk which is stored in the structure GCDI. As a result of the selection of one of the two valid values RNiV1, RNiV2 of the random values RNi (the visible segments SG to be displayed corresponding to an input data SGi set to the state one), the output of the corresponding AND gate AGi is set to state either 0 or 1, depending on the logical state of the selected random value RNiVk. Thus the visible segments SGi appear in each frame FRM with a probability equal to the probability of the random input value RNi to be set to state 1. If the number RNB is a true random number, this probability is equal to 50%.

The module GCI is a dedicated interpreting module configured to successively execute each of the logic gates of the first circuit layer L1, as defined by the data in the input data structure GCDI, and then each of the logic gates of second circuit layer L2. To this purpose, the interpreting module GCI can use a wire table receiving the value of each wire of the software component GC, written in the table at an index corresponding to the wire number of the wire value. The wire table is first loaded with the input values INi, INj, SGi, RNiVk of the software component, written in the table at indexes (between 1 and n+2s) corresponding to wire numbers assigned to the input values. Then the computed output value of each executed logic gate is written in the wire table at an index corresponding to the wire number of the output value. At the end of the software component execution, the wire table comprises the values of the outputs of the software component at indexes from (n+2s+g-m+1) to (n+2s+g).

The output value of each logic gate can be computed by applying a non-reversible function applied to both input values of the gate and to one value selected in the truth table of the gate, as a function of the least significant bit of each of the two input values:

$$OV = PF1(IN1, IN2, G) \qquad (1)$$

where IN1 and IN2 represent the input values of the gate, $G = GTT[IN1\{0\} // IN2\{0\}]$, $IN1\{0\}$ and $IN2\{0\}$ represent the least significant bit of the input values IN1, IN2, "//" represents the bit concatenation operator, GTT represents the four-element truth table of the gate, and PF1 represents the non-reversible function.

According to an embodiment, the function PF1 can use an encryption function such as AES (Advanced Encryption Standard) using an encryption key assigned to the software component. In this case, the encryption key GCK can be stored in the structure and content data GCD of the software component GC. For example, the output value OV of a logic gate can be computed as follows:

$$OV = AES(GCK, K) \oplus K \oplus G \qquad (2)$$

with K = CF(IN1,IN2)⊕T, "⊕" represents the Exclusive OR (XOR) operator, T represents a number assigned to logic gate, for example the number of the logic gate, and can also depend on the values of the inputs IN1, IN2, CF represents a combination function, and AES(GCK, K) represents an encrypted value of K by the AES encryption algorithm using the encryption key GCK. The combination function can be an XOR operation or an operation in the form:

$$CF(IN1,IN2) = SH(IN1,a) \oplus SH(IN2,b), \tag{3}$$

SH(X,a) representing a left shift operation of X by a number a of bits.

The least significant bit of each output data of the software component GC provided by the module GCI is considered as a pixel value PXi, PXj. The module XRG combines each pixel value PXi (least significant bit of each output value provided by the software component) with a respective mask bit value MKi belonging to an image mask IMSK provided in the structure and content data GCD. The combination operation used can be an XOR operation XRi. The respective least significant bits of the output values PXi, PXj of the software component represents white noise since the output values of the software component including the least significant bit thereof are randomly chosen. Thus the image parts generated by the software component are in an encrypted form, and are decrypted using the image mask IMSK.

The image mask IMSK comprises the message MSG, such that when combined with the pixels PXj provided by the software component GC, the message MSG becomes intelligible and combined with segments SG of the validation code CC. The image mask IMSK can also be configured to make visible the pixels PXi of a digit segment SG corresponding to a segment input value SGi fixed to the binary state 0 (segment configured to be invisible). In this way, the segment is always visible (with a probability of 100%) in the generated image frames FRM. Another way to configure a segment always visible or invisible is to attribute a same value to the two random values RNiV1, RNiV2 corresponding to the related segment input value SGi in the transmitted structure and content data GCD.

According to one embodiment, the final mask IMSK is transmitted to the terminal UT at step S23 using another communication channel, for higher security.

The interconnection matrices XM1, XM2 define where the pixels PXj corresponding to the input values INj and the pixels PXi corresponding to the segment input values SGi are displayed in the image frames FRM. The input values INi, INj define in relation with the image mask IMSK if the corresponding pixel PXi, PXj in output of the software component GC is visible or invisible, the visibility of the pixels PXi depending also on the corresponding value of the random input RNi. The respective binary states of the input values INi, INj can be randomly selected at the time the software component is generated, the image mask IMSK being then generated as a function of the selected binary states of the input values INi, INj, the interconnection matrices XM1, XM2 and the image frame FRM to be displayed which defines the visible and invisible pixels in the image frame.

The mapping module MPF inserts groups of pixels values PXi' provided by the module XRG, at suitable positions into a background image frame BCKF to generate one of the image frames FRM to be displayed. In particular, the module XRG provides a group of pixels PXi' which forms the banner frame BNF as shown in Figure 7, and groups of pixels PXi' which form each of the key labels KYL of one keypad frame KYPF to be displayed in a frame FRM. The mapping module MPF inserts these groups of pixels in respective predefined locations in the background image frame BCKF to generate one of the image frames FRM as shown in Figure 6A. In one embodiment, the module XRG outputs a directly displayable image frame. In this case, the mapping module is not mandatory.

The transmission in the structure and content data GCD of the software component of the two valid values of the random inputs RNi, enables introduction of randomness in the execution and output data of the software component at a very low cost. In contrast, a software component producing random output data would require to introduce a random generator in the software component, which cannot be obviously realized without adding complexity to the garbled circuit, and thus without increasing the size of the structure and content data GCD defining the software component. In addition, the transmission of the two valid values RNiV1, RNiV2 of the random inputs RNi does not reduce the security of the introduction of the password PC and validation code CC, since the correspondence between each random input value RNiV1, RNiV2 and a binary value 0 or 1 thereof cannot be established easily.

According to one embodiment, each time the terminal UT has to perform a new authentication, a new software component GC displaying a keypad KYP with a different key layout and displaying a different validation code CC is executed at step S27.

According to an embodiment, in order to avoid the transmission of one software component GC (at step S23), each time the user terminal is required to perform a new authentication, several alternative software components (defined by the structure and content data GCD) can be downloaded in the terminal UT in one time, and the terminal UT selects a non-already executed software component each time it has to perform a new authentication. As an example, several software components are downloaded with the application APP when the latter is downloaded and installed in a user terminal UT. Then, when one or several software components are used, a new set of software components can be downloaded from the server ASRV to the terminal UT, for example when the terminal has an efficient network connection.

According to an embodiment, several alternative software components are stored in the terminal UT in an encrypted form, and each time the terminal UT must execute a new software component, the server ASRV sends a corresponding decryption key to the user terminal.

According to an embodiment, only a part of each of the software components is downloaded into the terminal UT. The downloaded part of each software component can include the data GCID, DIM, NBGL, GTW with or without the table RNLB. Each time the terminal UT has to perform a new authentication, the server ASRV only transmits to the terminal the data INLB, SGLB, GCK and IMSK, at step S23. Then, the terminal UT transmits the identifier GCID of the software component used for authentication to the server ASRV, for example at step S25 or S29. When it receives a software component identifier GCID from a user terminal UT, the server ASRV checks in the database UDB that the received identifier corresponds with a next unexecuted or valid software component previously transmitted to the terminal UT. If the received identifier does not correspond with a next unexecuted or valid software component previously transmitted to the terminal UT, the server ASRV invalidates the user authentication and the corresponding transaction. The server ASRV may also invalidate a previous transaction performed with the same software component (corresponding to the same identifier GCID).

According to an embodiment, the server ASRV can assign a validity indicator (for example in the table GCP of Figure 5) to each software component it generates for a user terminal. The server ARSV sets the validity indicator to valid when it transmits the corresponding software component to a user terminal at step S23, and to invalid when it receives the corresponding message ARP at step S29. In addition, the server ARSV can assign a validity period to each generated software component, a software component being set to invalid when its validity period has elapsed. The server ASRV may be configured to rejects a message ARP transmitted at step S29 when it corresponds to a software component set to invalid.

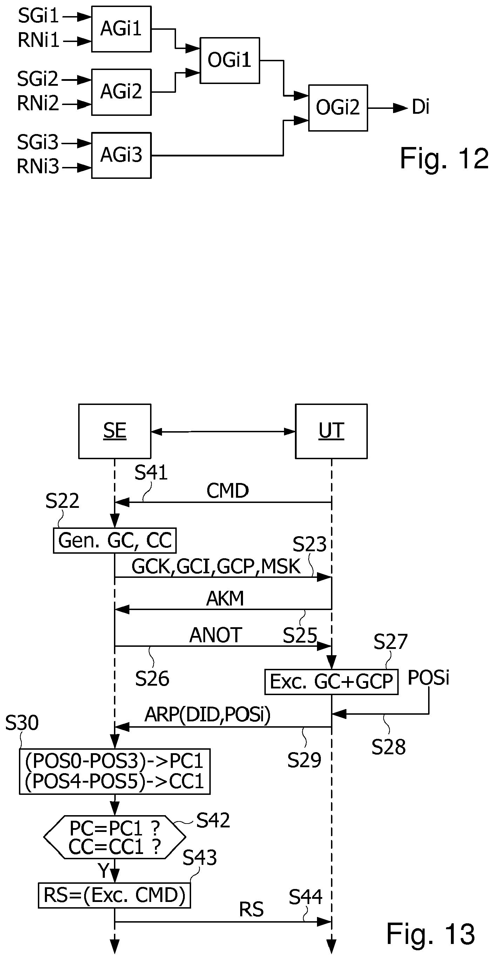

Figure 12 represents a part of the software component GC according to another embodiment. The circuit part disclosed in Figure 12 is intended to replace one logic gate AGi in the circuit of Figure 9. In the example of Figure 12, the circuit part comprises three AND gates AGi1, AGi2 and AGi3 and two OR gates OGi1, OGi2. Instead of having one segment input SGi and one random input RNi for each segment of the image frame FRM to be displayed with a probability lower than 100%, this circuit part comprises for one segment, three segment inputs SGi1, SGi2, SGi3 and three corresponding random inputs RNi1, RNi2, RNi3. Each of the gates AGi1, AGi2, AGi3 combines one respective segment input SGi1, SGi2, SGi3 with one respective random input RNi1, RNi2, RNi3. The outputs of the gates AGi1 and AGi2 are connected to the inputs of the gate OGi1, and the outputs of the gates AGi3 and OGi1 are connected to the inputs of the gate OGi2. The output Di of the gate OGi2 is connected to as much gates XGi as the number of pixels forming the segment controlled by the inputs SGi1, SGi2, SGi3. In this way, when all the segment inputs SGi1, SGi2, SGi3 are set to the binary state 0, the output Di of the gate OGi2 is set to the binary state 1 with a probability of 0%. When only one of the segment inputs SGi1, SGi2, SGi3 is set to the binary state 1, the output Di of the gate OGi2 is set to the binary state 1 with a probability of 50%. When only two of the segment inputs SGi1, SGi2, SGi3 are set to the binary state 1, the output Di of the gate OGi2 is set to the binary state 1 with a probability of 75%, and when all the three segment inputs SGi1, SGi2, SGi3 are set to the binary state 1, the output Di of the gate OGi2 is set to the binary state 1 with a probability of 87.5%. Depending on the corresponding input values INi1-INip and corresponding mask bit values MKil-MKip of the mask IMSK, and the segment input values SGi1, SGi2, SGi3, it is possible to display a segment SGi with a probability fixed either to 0%, 12.5%, 25%, 50%, 75%, 82.5% or 100%. According to an embodiment, the visible segments SG are displayed in the image frames FRM with a probability randomly set to either 12.5%, 25%, 50%, 75%; 82.5% or 100%.

These probabilities or others can be obtained using other combinations of logic gates combining the three segment input values SGi1, SGi2, SGi3 and the three random input values RNi1, RNi2, RNi3.

Obviously, other probability values can be reached by the software component, by increasing the number of inputs for one segment, and thus by increasing the number of AND gates in the first circuit layer L1 and the number of combining OR gates in following circuit layers.

According to one embodiment, the visible segments are displayed with a probability decreasing as a function of the experience level of the user. At first authentications, performed from a first installation of the application APP, the visible segments SG can be displayed in the image frames FRM with high probabilities, e.g. between 75% and 100%. As the experience level of the user grows, these probabilities can be progressively reduced and finally set to randomly-selected values for example between 12.5% and 50%.

In the embodiment using garbled circuits, the generation of a software component, performed by the server ASRV at step S22, comprises generating random values representing the binary states 0 and 1 of the input bits and of the output bits of the logic gates of the software component, some of the logic gate outputs corresponding to outputs of the garbled circuit. The generation of a software component further comprises randomly selecting the interconnection matrices XM1, XM2, i.e. randomly selecting the links between the inputs of the software component and the inputs of the logic gates of the software component, and between the outputs of some logic gates and the inputs of other logic gates (definition of the table GTW). The generation of a software component further comprises defining the truth tables GTT of the logic gates of the software component, and encrypting each value of these truth tables using an encryption key. According to an example, each four values G (=GTT[IN1 {0} // IN2{0}]) of the truth table of a logic gate of the software component GC can be computed as follows:

$$G = PF2(IN1, IN2, OV) \hspace{3cm} (4)$$

for each possible combination of the valid values of the inputs IN1, IN2 and the output OV, when considering the binary states corresponding to the valid values of IN1, IN2 and OV, and the logic operation performed by the logic gate, PF2 representing a non-reversible function. According to the example defined by equation (2), each four values G of the truth table of a logic gate can be computed as follows:

$$G = AES(GCK, K) \oplus K \oplus OV \hspace{3cm} (5)$$

with K = CF(IN1,IN2)⊕T.

As a consequence, it is very difficult to determine the binary states of the input and output values and the function of the logic gates of the software component. Thus the functioning of the software component GC cannot be easily determined. In addition, the software component can process only the two valid values of each input of the circuit, among a huge number of invalid values. Therefore, it is not possible to apply any values to the inputs of the software component. For more details on garbled circuits, reference may be made to the document "Foundations of Garbled Circuits", Mihir Bellare, Viet Tung Hoang, Phillip Rogaway, dated October 1, 2012.

A hacker or a malware program executed by the terminal UT may be able to get the password PC input by the user at step S10. However, the knowledge of this password is not sufficient for the hacker to be authenticated at steps S21 to S32 since the typed positions POSi must correspond to the keypad KYP and validation code CC displayed by the execution of the software component GC transmitted to the terminal UT at step S23. The hacker or malware has a very short time to get the keypad key layout by analyzing the displayed image frames FRM or by executing or analyzing the software component.

When the server ASRV generates the software component GC, it can be decided to use another bit rank in the values of the wires of the software component for defining the corresponding binary state of these values. Thus, the bits at the selected bit rank in the input values a logic gate AGi are used to select a data in the truth table GTT of the logic gate, and the bits at the selected bit rank in the output values PXi of the software component GC are extracted and applied to the module XRG.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

The methods disclosed herein may be implemented by software programs executable by the main processor HP (CPU) of the user terminal UT, or at least partially by the graphic processor GP of the user terminal UT.

Further, the methods disclosed herein are not limited to displaying sensitive information such as a keypad with a randomly selected layout and a validation code. Indeed, the object of such a display is to check that the user knows a secret data shared with the server ASRV and perceives information presented by the terminal in a way perceptible only by a human. Alternative challenge-response schemes can be implemented in other embodiments. According to an embodiment, the displayed message MSG may request the user to input a combination such as the sum or the multiplication of the digits of the displayed validation code CC.

In addition to this or in another embodiment, the generated frames may comprise differences with a previously generated frame.

According to another embodiment, the flickering or blinking of segments may be controlled directly in/by the graphic processor, by setting pixel intensity, additive or subtractive pixel color, pixel refresh rate, or pixel flickering parameters of the graphic processor.

The challenge can be transmitted to the user using other means than by displaying it on a display screen. For instance, the challenge can be transmitted to the user by audio means using an audio cryptographic algorithm such as described in "Simple Audio Cryptography", by Yusuf Adriansyah, dated April 29, 2010. According to this algorithm, an original audio sequence is decomposed into a number of source audio sequences of the same length as the original audio sequence, in a way such that the original audio sequence can be reconstructed only by simultaneously playing all the source audio sequences generated by the decomposition, and such that it is very difficult to reconstruct the original audio sequence if any one of the source audio sequence is missing. Provision may be made to play two source audio sequences simultaneously, one via the terminal UT and the other via other means such as a portable device having a memory storing a source audio sequence and a headphone playing the stored source audio sequence without a microphone of the terminal hearing it. If the user hears an intelligible audio message by playing the two source audio sequences simultaneously, it means that the source audio sequence played by the portable device complements the source audio sequence.

According to another embodiment, the user records his fingerprints at step S10. At step S27, the software component GC displayed a message requesting the user to input one or two particular fingerprints, for example the thumb print and the ring finger print. This message is displayed using segments, as the digits representing the key labels KYL and validation code CC. At step S28, the user inputs the requested fingerprints, and at the verification steps S30 and S31, the server ASRV compares the input fingerprints with the one it stored after step S10. Here, the shared secret data are the fingerprints and the information to be perceived by the user is the designation of the requested fingers.

Further, the methods disclosed herein are not limited to authenticating a user in view of validating a transaction. The methods disclosed herein may be applied to securely transmit secret information to or from a user, or more generally to securely perform a sensitive operation in a non-secure environment.

Further, the methods disclosed herein are not limited to a method comprising displaying image frames and introduction of secret data (PC, CC) using a single user terminal. The methods disclosed herein may be applied to securely authenticate a user on another connected device, the frame images being displayed on the user terminal or on a remote display such as a smartwatch, virtual reality glasses or lenses, or projected on a surface or in the form of a 3D image. Similarly, the secret data may be input in another device connected to the user terminal or using voice or gesture. Therefore, the words "user terminal" may designate a single device or a set of devices including a terminal without a display, an IoT (Internet of Things) terminal, a smart home terminal, and any input terminal that allows the user to enter data.

The user terminal UT may be controlled by voice or gesture. Voice command may be translated to command. Each recognized command being equivalent to one of the positions POSi. The keypad may be replaced by any other representations such as the ones requiring a gesture, following a geometric figure or tracing links between dots. Further, the input terminal may be a 3D input terminal with which the user may interact by 3D gestures in the air. Therefore the positions POSi may be 3D coordinate positions in space.

In other embodiments, the display may be any display including for example an ATM, a vending machine, a TV, a public display, a projected display, a virtual display a 3D display or a hologram. In other embodiments, the terminal may be any input equipment including for example a touch screen, a game accessory, a gesture acquisition system, a voice or sound command system.

In other embodiments, the images frames FRM are generated without applying the mask IMSK, and are displayed separately from the mask IMSK using two display devices, one of the two display devices being transparent, such as a display device in the form of eye lenses, the displayed images becoming intelligible to the user when the displayed image frames are superimposed with the display mask IMSK.

Further, the methods disclosed herein, introducing randomization in the execution of the software component protected against tampering and reverse-engineering, are not limited to generate blinking pixel in an image or an image frame. More generally, these methods can be used in any application in which a random state is required in a sensitive software function, protected against reverse-engineering and tampering, the software function receiving input data and providing output data. For example, these methods can be applied to protection of data without using encryption or decryption keys which are exposed to key theft. In this example, the software component is configured to provide a part of the protected data as a function of a set of random input data, each random input data having two possible values. Each combination of the random input values applied to the software component is used to compute a respective part of the protected data. The number of combinations of the random input values defines the number of data parts that can be computed by executing the software component. As an example, the data to be protected can be images, and the data parts of such images can be pixel values of an image or color component values of the image pixels, the execution of the software component providing a pixel value or a part thereof and a position of the pixel in the image (see "Secure Image Datasets in Cloud Computing", X. Arogya Presskila, P .Sobana Sumi, in International Journal of Advanced Research in Computer Science and Software Engineering, Vol. 4, Issue 3, March 2014). The parts of the data to be protected that are each computed by one execution of the software component applied to one combination of the input values can be as small as desired. For instance, the software component can be configured to provide by one execution a point of a Gaussian curve or a value that is used to compute a histogram, the data part value corresponding to the highest value computed by the software component or to the value having the highest occurrence number in the histogram. Only a part of the protected data can be made accessible when only a part of the two alternative values of the input data of the software component is provided, only one value being provided for the other input data of the software component.

Further, the methods disclosed herein are not limited to an implementation involving an authentication server. Other implementations can involve a secure element within the user terminal, such as the secure processor SE shown in Figure 2, or a secure domain within the main processor HP of the terminal. In the methods disclosed herein, all operations performed by the server ASRV can be performed by such a secure element. Figure 13 represents authentication steps S41 to S44 performed by the user terminal UT and a secure element SE connected to the main processor HP of the terminal UT, and enabling the secure element to authenticate the user. At step S41, the terminal UT transmits a command CMD to the secure element SE, this command requiring an authentication of the user before being executed by the secure element. Then the secure element SE and the terminal UT performs steps S22, S23, and S25 to S30, as previously disclosed. The secure element SE performs steps S22, S23, S26 and S30, in place of the server ASRV. Then the secure element SE performs steps S42 to S44. At step S42, the secure element SE compares the password PC1 and validation code CC1 input by the user to corresponding values PC and CC securely stored by secure element SE. If the password PC1 and validation code CC1 typed by the user match the values PC and CC stored by the secure element SE, the latter performs step S43 in which it executes the command CMD requested at step S41. At step S44, the secure element SE transmits an execution report RS of the command CMD.

Further, the methods disclosed herein are not limited to garbled circuits comprising gates having only two inputs and one output. Other types of gates with three or more inputs and one or more outputs or receiving data having more than two valid states may be implemented using truth tables having more than four lines. Therefore, the randomness obtained by transmitting and selecting one of the possible values RNiV1 and RNiV2 of the input RNi, may also be obtained by transmitting and randomly selecting one value among three or more valid values of an input of the garbled circuit.

Further, the methods disclosed herein are not limited to an implementation of the software component by a garbled circuit. Other implementations of the software component such as including obfuscated programs can be used to hide parts of the program loaded in the main processor of the terminal UT, and/or to prevent sensitive parts of the program from being unveiled or modified by unauthorized persons. Methods of obfuscating programs are disclosed for example in the documents "Obfuscating Circuits via Composite-Order Graded Encoding" Benny Applebaumy, Zvika Brakerskiz, IACR-TCC 12/01/2015, and "How to Obfuscate Programs Directly", Joe Zimmerman, IACR, 30/09/2014.

More generally, the conception of a garbled circuit can be perform by translating a program written in language such as C or C++ into a circuit design language such as VHDL or Verilog to obtain a logic or Boolean circuit comprising logic gates.

Further, the methods disclosed herein are not limited to the use of a software component protected against tampering and reverse-engineering, such as generated using obfuscation or garbled circuit methods. As an example of such an application, the methods disclosed herein may be used to perform operations that do not require high security level, such as video games or medical eye testing.

Further, the methods disclosed herein are not limited to an implementation involving a mask such the image mask IMSK to decrypt output values of the software component. Other implementations can generate and execute a software component directly outputting the pixels values to be displayed. In addition, the message MSG can be directly provided in the output pixel values. In addition the mask can be transmitted separately from the software component or the structure and content data thereof, even after the execution of the software component.

Further, the methods disclosed herein can be implemented with a user terminal UT that only comprises a hardware keypad, the displayed frames FRM being displayed just to assign other key labels to the physical keypad. Thus, instead to touch positions of the display screen to input the positions POSi, the user activates hardware keys of the keypad in correspondence with the assigned labels shown in the displayed frames FRM.

The term pixel, as used herein for a standard display screen, may be understood as coordinates, either 2D coordinates for a 2D display or 3D coordinates for a 3D or stereo display or for a projected display.

Further, the disclosure and the illustrations are to be considered as illustrative rather than restrictive, and the appended claims are intended to cover all such modifications, enhancements and other embodiments, or combinations thereof, which fall within the true spirit and scope of the description. Therefore, the scope of the following claims is to be determined by the broadest permissible interpretation of the claims and their equivalents, and shall not be restricted or limited by the foregoing description.

**Claims**

1. A method for securely transmitting a secret data to a user, the method comprising:

   receiving by a user terminal, from a secure processor (ASRV, SE), a software component (GC) protected against tampering and reverse-engineering and configured to receive input data (SGi, RNi, INi, INj) and to provide output data (PXi, PXj), each of the input and output data having invalid values and two randomly-selected valid values corresponding to two respective randomly-selected binary states;

executing the software component by the user terminal to generate the output data;

receiving a decryption mask (IMSK) by the user terminal; and

determining, by the user terminal, the binary states of the output data by combining a bit of each output data with a respective bit of the decryption mask, by an Exclusive OR operation, the secret data comprising the binary states of the output data.

2. The method of claim 1, wherein the secret data is an image to be displayed by the user terminal, the software component being configured to generate an encrypted image comprising encrypted pixels, the decryption mask being configured to generate a decrypted image from the encrypted image.

3. The method of claim 2, wherein the decryption mask is configured to insert a message (MSG) to be displayed to the user, into the decrypted image.

4. The method of one of claims 1 to 3, wherein the software component (GC) is configured to generate one set (SG) of pixels (PXi1-PXip) having a probability lower than 100% to be in a visible or invisible state, the software component being executed by the user terminal, at a rate corresponding to a display refresh rate of frames displayed by the user terminal, to generate the pixel set at the display refresh rate, the method further comprising:

Inserting, by the user terminal, the pixel set generated by each execution of the software component into one respective image frame (FRM); and

displaying the image frames, the image frames including unintelligible information (KYL, CC) formed of the pixel set inserted into the image frames, the unintelligible information becoming intelligible to a user at the display refresh rate thanks to the persistence of the human visual system.

5. The method of one of claims 1 to 4, wherein the software component is encoded as a garbled circuit (GC) comprising circuit inputs (SGi, RNi, INi, INj), circuit outputs (PXi, PXj), logic gates (AGi, XGi, XGj) and wires, each logic gate having two inputs and one output, each wire having a first end connected to one of the circuit inputs or to one of the logic gate outputs and a second end connected to one of the logic gate inputs or to one of the circuit outputs, the garbled circuit being generated by selecting a valid data for each binary state of each of the wires, and by computing for one logic gate of the garbled circuit, truth table values as a function of each valid data of each input of the logic gate, each valid data of the output of the logic gate and a logic operation performed by the logic gate.

6. The method of claim 5, wherein the software component (GC) comprises one pixel set generation circuit (SGCi) for each pixel set (SG) to generate, each generation circuit comprising a first logic gate (AGi) and a set of second logic gates (XGi), the first logic gate combining a first input data (SGi) to a randomly selected second data (RNi), and providing an output data (Di) to a first input of each of the second logic gates, a second input of each of the second logic gates receiving a third input data (INi), each of the outputs of the second logic gates providing a pixel value of the set of pixels (PXi1-PXip).

7. The method of claim 6, wherein one of the pixel set generation circuits (SGCi) comprises several first logic gates (AGi1-AGi3, OGi1, OGi2), receiving first input data (SGi1-SGi3) and randomly-selected second input data (RNi1-RNi3), and providing the output data to each of the second logic gates (XGi).

8. The method of claim 4 to 7, wherein the software component (GC) is configured to provide the output data (PXi) in one of the two binary states with a probability set to 50%, or comprised between 12.5% and 87.5%.

9. A method for securely transmitting a secret data from a user to a secure processor (ASRV, SE), the method comprising:

securely displaying a secret challenge to a user by means of a user terminal (UT), according to the method of one of claims 1 to 8;

acquiring data (POSi) introduced by the user in the user terminal, in relation with the displayed secret challenge;

transmitting by the user terminal, the data introduced by the user, to the secure processor, a secret data (PC) known by the user being determinable from the data introduced by the user and from the secret challenge.

10. A user terminal configured to:

receive from a secure processor (ASRV, SE), a software component (GC) protected against tampering and reverse-engineering and configured to receive input data (SGi, RNi, INi, INj) and to provide output data (PXi, PXj), each of the input and output data having invalid values and two randomly-selected valid values corresponding to two respective randomly-selected binary states;

execute the software component to generate the output data;

receive a decryption mask (IMSK); and

determine the binary states of the output data by combining a bit of each output data with a respective bit of the decryption mask, by an Exclusive OR operation, the secret data comprising the binary states of the output data.

11. The terminal of claim 10, configured to execute the operations performed by a terminal in the method of one of claims 2 to 9.

12. The terminal of claim 10 or 11, wherein the secure processor is a secure element (SE) connected to a main processor (HP) of the terminal.

13. The terminal of claim 10 or 11, wherein the secure processor belongs to a remote server (ASRV) linked to the terminal through a data transmission network (NT).

14. A secure element configured to execute the operations performed by a secure processor in the method of one of claims 1 to 9, wherein the secure element (SE) is connected to a main processor (HP) of a terminal (UT).

15. A server configured to execute the operations performed by a secure element in the method of one of claims 1 to 9, the server (ASRV) being linked to the terminal (UT) through a data transmission network (NT).

16. A computer program product loadable into a computer memory and comprising code portions which, when carried out by a computer, configure the computer to carry out the operations performed by the terminal of one of claims 10 to 13.

Fig. 1

Fig. 2

EP 3 319 068 A1

Fig. 3

Fig. 4

Fig. 5

Order: transfer
xx € to yyyy

BNF

BN

MSG

MSG

CC

IMG

FRM

FBD

FBD

KY

KY

KYL

KYL

SG

KYPF

KYP

Order: transfer
xx € to yyyy

Fig. 6A

Fig. 6B

Order: transfer
xx € to yyyy

CC SG

MSG

BNF

Order: transfer
xx € to yyyy

MSG

SG

DL

BN

Order: transfer
xx € to yyyy

CC

MSG

Fig. 7

Fig. 8

Fig. 9

GCD

| GCID | | | | | | | |
|------|---|---|---|---|---|---|---|
| DIM | n | m | s | g | k | w | l |
| INLB[1..n] | | | | | | | |
| SGLB[1..s] | | | | | | | |
| RNLB[1..s] | RNV1 | RNV2 | | | | | |
| NBGL[1..l] | | | | | | | |
| GTW[1..g] | IN1 | IN2 | ON | GTYP | | | |
| GTT[1..k] | OV00 | OV01 | OV10 | OV11 | | | |
| GCK | | | | | | | |

Fig. 10

Fig. 11

Fig. 12

Fig. 13

Europäisches
Patentamt

European
Patent Office

Office européen
des brevets

# EUROPEAN SEARCH REPORT

Application Number

EP 16 19 6953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIMMO JÃ RVINEN ET AL: "Garbled Circuits for Leakage-Resilience: Hardware Implementation and Evaluation of One-Time Programs", INTERNATIONAL ASSOCIATION FOR CRYPTOLOGIC RESEARCH,, vol. 20100617:125539, 17 June 2010 (2010-06-17), pages 1-17, XP061004126, [retrieved on 2010-06-17] | 1,5-8, 10,11, 14-16 | INV. G09C5/00 H04L9/32 |
| Y | * pages 1-8, 16; figures 1,2 * | 2,4,9, 12,13 | |
| Y,D | US 2016/085974 A1 (LELEU JEAN-LUC [FR]) 24 March 2016 (2016-03-24) * paragraphs [0060], [0069] - [0074]; figure 6 * | 2,4,9, 12,13 | |
| A | EP 2 525 561 A1 (RAKUTEN INC [JP]) 21 November 2012 (2012-11-21) * the whole document * | 1-16 | |
| A | US 8 209 743 B1 (FRANK JONATHAN [US]) 26 June 2012 (2012-06-26) * column 3, line 54 - column 6, line 40; figures 2-3 * | 1-16 | TECHNICAL FIELDS SEARCHED (IPC) G09C H04L |

The present search report has been drawn up for all claims

| Place of search | Date of completion of the search | Examiner |
|---|---|---|
| Munich | 8 May 2017 | Horbach, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 19 6953

This annex lists the patent family members relating to the patent documents cited in  the above-mentioned European search report.
The members are as contained in the European Patent Office EDP file on
The European Patent Office is in no way liable for these particulars which are merely given for the purpose of information.

08-05-2017

| Patent document cited in search report | | Publication date | Patent family member(s) | | Publication date |
|---|---|---|---|---|---|
| US 2016085974 | A1 | 24-03-2016 | EP | 2673732 A1 | 18-12-2013 |
| | | | FR | 2971599 A1 | 17-08-2012 |
| | | | US | 2014040633 A1 | 06-02-2014 |
| | | | US | 2016085974 A1 | 24-03-2016 |
| | | | WO | 2012107698 A1 | 16-08-2012 |
| EP 2525561 | A1 | 21-11-2012 | CN | 102763117 A | 31-10-2012 |
| | | | CN | 105205354 A | 30-12-2015 |
| | | | EP | 2525561 A1 | 21-11-2012 |
| | | | JP | 4950315 B2 | 13-06-2012 |
| | | | JP | 2011182054 A | 15-09-2011 |
| | | | TW | 201210338 A | 01-03-2012 |
| | | | US | 2012293537 A1 | 22-11-2012 |
| | | | WO | 2011105482 A1 | 01-09-2011 |
| US 8209743 | B1 | 26-06-2012 | US | 8209743 B1 | 26-06-2012 |
| | | | US | 2012266215 A1 | 18-10-2012 |
| | | | US | 2016191505 A1 | 30-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012107698 A

**Non-patent literature cited in the description**

- **MIHIR BELLARE ; VIET TUNG HOANG ; PHILLIP ROGAWA.** *Foundations of Garbled Circuits,* 01 October 2012
- **YUSUF ADRIANSYAH.** *Simple Audio Cryptography,* 29 April 2010
- **X. AROGYA PRESSKILA ; P .SOBANA SUMI.** Secure Image Datasets in Cloud Computing. *International Journal of Advanced Research in Computer Science and Software Engineering,* March 2014, vol. 4 (3
- **BENNY APPLEBAUMY ; ZVIKA BRAKERSKIZ.** Obfuscating Circuits via Composite-Order Graded Encoding. *IACR-TCC,* 12 January 2005
- **JOE ZIMMERMAN.** How to Obfuscate Programs Directly. *IACR,* 30 September 2014